# EUROPÄISCHE PATENTANMELDUNG

(11) **EP 4 403 342 A1**
(43) Veröffentlichungstag der Anmeldung: **24.07.2024**
(21) Anmeldenummer: 24150710.2
(22) Anmeldetag: 08.01.2024
(51) Int. Cl.: B29D 30/06, B29D 30/72, B29D 30/00, G01M 17/02

(54) **VERFAHREN FÜR EINE NACHBEHANDLUNG EINES FAHRZEUGREIFENS**

(30) Priorität: 23.01.2023 DE 102023200475
(71) Anmelder: Continental Reifen Deutschland GmbH, 30175 Hannover (DE)
(72) Erfinder: Wehner, Deik Jon, 30175 Hannover (DE); Fingerhut, Jörg, 30175 Hannover (DE)
(74) Vertreter: Continental Corporation

(57) **Zusammenfassung**

Die Erfindung betrifft ein Verfahren mit folgenden Schritten:
a) Bereitstellen eines Fahrzeugreifens (1) mit einem Fehler (2) auf der Seitenwand (3),
b) Identfizieren des Fehlers (2) mit einer Scan-Vorrichtung (4),
wobei die Scan-Vorrichtung (4) die Position des Fehlers (2) auf der Seitenwand (3) detektiert und auf einem Datenspeicher speichert,
c) Verfahren einer Laser-Vorrichtung (5) über die Position mit dem Fehler (2) auf der Seitenwand (3),
d) Ausbessern des Fehlers (2) mit der Laservorrichtung (5),
wobei mit einem Laser (6) eine fehlende Kontur in die Seitenwand (3) eingraviert wird.

## Beschreibung

Die Erfindung betrifft ein Verfahren Verfahren für eine Nachbehandlung eines Fahrzeugreifens.

Es ist bekannt, dass bei der Herstellung von Fahrzeugreifen Fehler bei der Reifenvulkanisation auftreten können. Eine Fehler kann beispielsweise darin bestehen, dass einzelne Buchstaben bei einer Beschriftung auf der Seitenwand des Fahrzeugreifens fehlen.

Der Erfindung liegt die Aufgabe zugrunde, ein Verfahren bereitzustellen, mit dem die Nachbearbeitung von Fahrzeugreifen verbessert wird.

Gelöst wird die Aufgabe gemäß Anspruch 1 dadurch, dass ein Verfahren mit folgenden Schritten eingesetzt wird:
a) Bereitstellen eines Fahrzeugreifens mit einem Fehler auf der Seitenwand,
b) Identfizieren des Fehlers mit einer Scan-Vorrichtung,
   wobei die Scan-Vorrichtung die Position des Fehlers auf der Seitenwand detektiert und auf einem Datenspeicher speichert,
c) Verfahren einer Laser-Vorrichtung über die Position mit dem Fehler auf der Seitenwand,
d) Ausbessern des Fehlers mit der Laservorrichtung,
wobei mit einem Laser eine fehlende Kontur in die Seitenwand eingraviert wird.

Ein Vorteil der Erfindung ist insbesondere darin zu sehen, dass mit dem neuen Verfahren die Nachbearbeitung von Fahrzeugreifen wesentlich verbessert wird. Bei herkömmlichen Verfahren zur Nachbearbeitung des Fahrzeugreifen sind eine Vielzahl von manuellen Tätigkeiten erforderlich, die von einem Mitarbeiter durchgeführt werden müssen. Das neue Verfahren kann hingegen mit einem hohen Automatisierungsgrad erfolgen. Das Identifizieren des Fehlers erfolgt mit einer Scan-Vorrichtung, die die Position des Fehlers auf der Seitenwand automatisiert detektiert. Anschließend wird der Fehler mit einer Laservorrichtung ausgebessert. Ein weiterer Vorteil besteht darin, dass das Verfahren zur Nachbearbeitung mit einem geringen Zeitaufwand durchgeführt werden kann.

In einer vorteilhaften Weiterbildung der Erfindung ist vorgesehen, dass der Fehler eine Buchstabenfolge, eine Zahlfolge und/ oder ein Zeichensymbol umfasst. Derartige Fehler lassen sich mit der Laservorrichtung auf einfache Weise nachbessern.

In einer weiteren vorteilhaften Weiterbildung der Erfindung ist vorgesehen, dass vor dem Ausbessern des Fehlers eine Materiallage aus Gummi auf der Position mit dem Fehler aufgebracht wird.

Es kann vorkommen, dass an der Fehlstelle zu wenig Gummimaterial vorhanden ist. Daher wird als erstes an der Fehlstelle neues Gummimaterial aufgebracht. Anschließend erfolgt die Ausbesserung des Fehlers mit der Laservorrichtung.

In einer weiteren vorteilhaften Weiterbildung der Erfindung ist vorgesehen, dass die Materiallage aus Gummi mit einer dreidimensionalen Druckvorrichtung auf die Seitenwand aufgebracht wird.

Mit der dreidimensionalen Druckvorrichtung lässt sich das Gummimaterial auf einfache Weise auf die Seitenwand aufbringen.

In einer weiteren vorteilhaften Weiterbildung der Erfindung ist vorgesehen, dass die Scan-Vorrichtung einen Laserstrahl umfasst, mit dem die Oberfläche der Seitenwand abgetastet wird.

Mit dem Laserstrahl lässt sich die Oberfläche des Fahrzeugreifens mit einer hohen Geschwindigkeit abtasten.

In einer weiteren vorteilhaften Weiterbildung der Erfindung ist vorgesehen, dass die Fehler auf der Seitewand dadurch identifiziert werden, dass mit der Scan-Vorrichtung ein Vergleich mit einer vorgegebenen idealen Kontur einer Seitenwand erfolgt.

Dadurch lassen sich die Fehler auf der Seitenwand auf einfache Weise identifizieren.

In einer weiteren vorteilhaften Weiterbildung der Erfindung ist vorgesehen, dass das Identifizieren der Fehler auf der Seitewand und/oder das Ausbessern der Fehler mit der Laservorrichtung vollautomatisiert mit einer Rechnereinheit durchgeführt werden.

Dadurch kann weitestgehend auf einen Bediener verzichtet werden.

Anhand von Ausführungsbeispielen soll die Erfindung näher erläutert werden. Es zeigt:
- Fig. 1:: Einen Fahrzeugreifen in der Seitenansicht mit der Scanvorrichtung.
- Fig. 2:: Einen Fahrzeugreifen mit der Laservorrichtung.

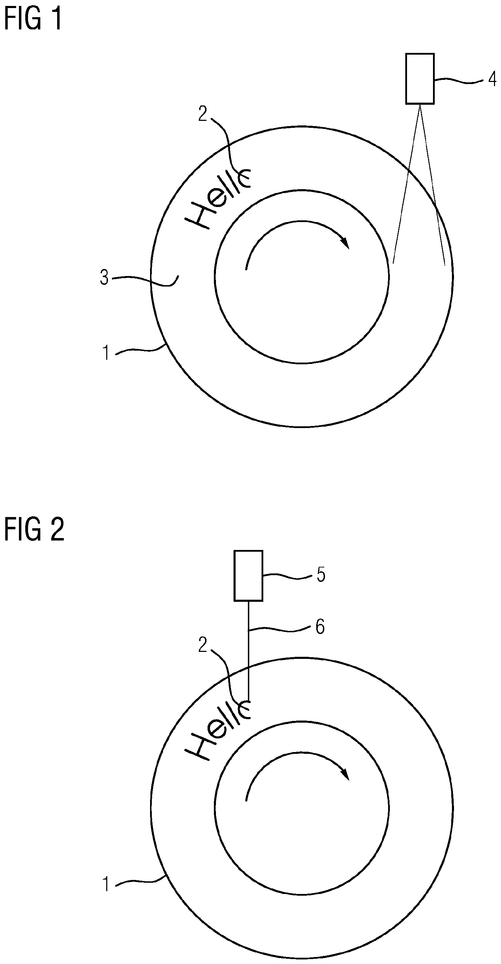

Die Figur 1 zeigt einen Fahrzeugreifen 1 mit der Seitenwand 3 in einer Seitenansicht. Auf der Seitenwand 3 befindet sich ein Fehler 2 in Form eines fehlerhaften Schriftzuges. Beim letzten Buchstaben fehlt die hintere Kontur des Buchstabens "o". Der Fehler kann beispielsweise aufgrund einer fehlerhaften Reifenvulkanisation entstanden sein. Der Fehler wird mit der Scanvorrichtung 4 identifiziert. Dabei rotiert der Fahrzeugreifen 1 in der angezeigten Richtung um seine eigene Achse. Die Scanvorrichtung tastet mit einem Laser die Oberfläche der Seitenwand 3 ab und identifiziert dabei die Position des Fehlers 2 auf der Seitenwand. Anschließend wird die Position des Fehlers auf einem Datenspeicher einer Rechnereinheit abgespeichert.

Die Figur 2 zeigt den Fahrzeugreifen 1 mit der Laservorrichtung 5 in einer Seitenansicht. Die Laservorrichtung 5 wird mit den abgespeicherten Positionsdaten zur Position über dem Fehler 2 geführt. Es ist der Verfahrensschritt gezeigt, bei dem die Laservorrichtung über dem Fehler 2 auf der Seitenwand positioniert worden ist. Anschließend wird mit dem Laserstrahl 6 der Fehler 2 auf der Seitenwand ausgebessert. Der Laser 6 graviert den hinteren Teil des letzten Buchstabens direkt in das Gummimaterial der Seitenwand ein. Anschließend ist wieder die vollständige Kontur des letzten Buchstabens auf der Seitenwand zu erkennen.

### Bezugszeichenliste (ist Teil der Beschreibung)

- 1: Fahrzeugreifen
- 2: Fehler auf der Seitenwand (Fehlerhafter Schriftzug)
- 3: Seitenwand
- 4: Scan-Vorrichtung
- 5: Laser-Vorrichtung
- 6: Laserstrahl

## Patentansprüche

1. Verfahren für eine Nachbehandlung eines Fahrzeugreifens (1) mit folgenden Schritten:
a) Bereitstellen eines Fahrzeugreifens (1) mit einem Fehler (2) auf der Seitenwand (3),
b) Identfizieren des Fehlers (2) mit einer Scan-Vorrichtung (4),
wobei die Scan-Vorrichtung (4) die Position des Fehlers (2) auf der Seitenwand (3) detektiert und auf einem Datenspeicher speichert,
c) Verfahren einer Laser-Vorrichtung (5) über die Position mit dem Fehler (2) auf der Seitenwand (3),
d) Ausbessern des Fehlers (2) mit der Laservorrichtung (5),
wobei mit einem Laser (6) eine fehlende Kontur in die Seitenwand (3) eingraviert wird.

2. Verfahren nach Anspruch 1,
**dadurch gekennzeichnet, dass**
der Fehler (2) eine Buchstabenfolge, eine Zahlfolge und/ oder ein Zeichensymbol umfasst.

3. Verfahren nach einem der vorhergehenden Ansprüche,
**dadurch gekennzeichnet, dass**
vor dem Ausbessern des Fehlers (2) eine Materiallage aus Gummi auf der Position mit dem Fehler (2) aufgebracht wird.

4. Verfahren nach einem der vorhergehenden Ansprüche,
**dadurch gekennzeichnet, dass**
die Materiallage aus Gummi mit einer dreidimensionalen Druckvorrichtung auf die Seitenwand aufgebracht wird.

5. Verfahren nach einem der vorhergehenden Ansprüche,
**dadurch gekennzeichnet, dass**
die Scan-Vorrichtung (4) einen Laserstrahl umfasst, mit dem die Oberfläche der Seitenwand (3) abgetastet wird.

6. Verfahren nach einem der vorhergehenden Ansprüche,
**dadurch gekennzeichnet, dass**
die Fehler auf der Seitewand (3) dadurch identifiziert werden, dass mit der Scan-Vorrichtung (4) ein Vergleich mit einer vorgegebenen idealen Kontur einer Seitenwand erfolgt.

7. Verfahren nach einem der vorhergehenden Ansprüche,
**dadurch gekennzeichnet, dass**
das Identifizieren der Fehler (2) auf der Seitewand (3) und/oder das Ausbessern der Fehler (2) mit der Laservorrichtung (6) vollautomatisiert mit einer Rechnereinheit durchgeführt werden.
